# EUROPÄISCHE PATENTSCHRIFT

(11) **EP 0 544 725 B1**
(45) Veröffentlichungstag und Bekanntmachung des Hinweises auf die Patenterteilung: **13.04.1994**
(21) Anmeldenummer: 91914612.6
(22) Anmeldetag: 07.08.1991
(51) Int. Cl.: B60Q 1/30

(54) **HECKLEUCHTE FÜR EIN KRAFTFAHRZEUG**
MOTOR VEHICLE TAIL-LIGHT
FEU ARRIERE POUR VEHICULES A MOTEUR

(30) Priorität: 25.08.1990 DE 4026945
(43) Veröffentlichungstag der Anmeldung: 09.06.1993
(73) Patentinhaber: Dr.Ing.h.c. F. Porsche Aktiengesellschaft, 70435 Stuttgart (DE)
(72) Erfinder: LIANOURIDIS, Dimos, D-7015 Korntal-Münchingen (DE)
(86) Internationale Anmeldenummer: EP9101496
(87) Internationale Veröffentlichungsnummer: WO9203308

(56) Entgegenhaltungen:
- DE-A- 3 942 151
- DE-A- 4 003 569

## Beschreibung

Die Erfindung betrifft eine Heckleuchte nach dem Oberbegriff des Patentanspruchs 1.

Es ist bekannt, DE-GM 80 25 677, eine zusätzliche Bremsleuchte, auch hochgesetzte Bremsleuchte genannt, versenkt in einer U-förmigen Aufnahme eines Heckspoilers anzuordnen. Nachteilig bei dieser Ausführung ist, daß keine Vorkehrungen getroffen sind, um die Bremsleuchte einfach und sicher zu halten bzw. leicht zu montieren.

Aufgabe der Erfindung ist es daher, für die Bremsleuchte eine Halterung zu schaffen, die nicht nur kostengünstig herstellbar und mit relativ geringem Aufwand am Fahrzeug befestigbar ist, sondern auch hinsichtlich Montage der Bremsleuchte Vorteile bringt.

Erfindungsgemäß wird diese Aufgabe durch die kennzeichnenden Merkmale des Patentanspruchs 1 gelöst. Weitere, die Erfindung ausgestaltenden Merkmale sind in den Unteransprüchen enthalten.

Die mit der Erfindung hauptsächlich erzielten Vorteile sind darin zu sehen, daß die Bremsleuchte funktionsgerecht in der Aufnahme, die raumsparend am unteren Leitelement der Luftleitvorrichtung angeordnet ist, gehalten ist. Hinzu kommt der konstruktiv wenig Mittel beanspruchende Aufbau der Aufnahme und die einfache Montage der Bremsleuchte in letzterer, wobei mit der Schraube zur Befestigung der Heckleuchte gleichzeitig auch der elektrische Kontakt von einem Stromführungskabel zu den Leuchtkörpern der Bremsleuchte bewerkstelligt wird.

Das Leuchtegehäuse wird durch zwei kostengünstig herstellbare Kunststoffteile gebildet, und zwar durch ein die Leuchtkörper tragendes Sockelteil und ein Reflektorgehäuse. Das Sockelteil und das Reflektorgehäuse sind über gut wirksame Rastverbindungen, sie lassen sich an den Kunststoffteilen leicht darstellen, miteinander verbunden.

In der Zeichnung wird ein Ausführungsbeispiel der Erfindung gezeigt, das nachstehend näher beschrieben ist.
Es zeigt
- Fig. 1: eine Schrägansicht von hinten auf ein Kraftfahrzeug,
- Fig. 2: einen Schnitt nach der Linie II-II der Fig. 1,

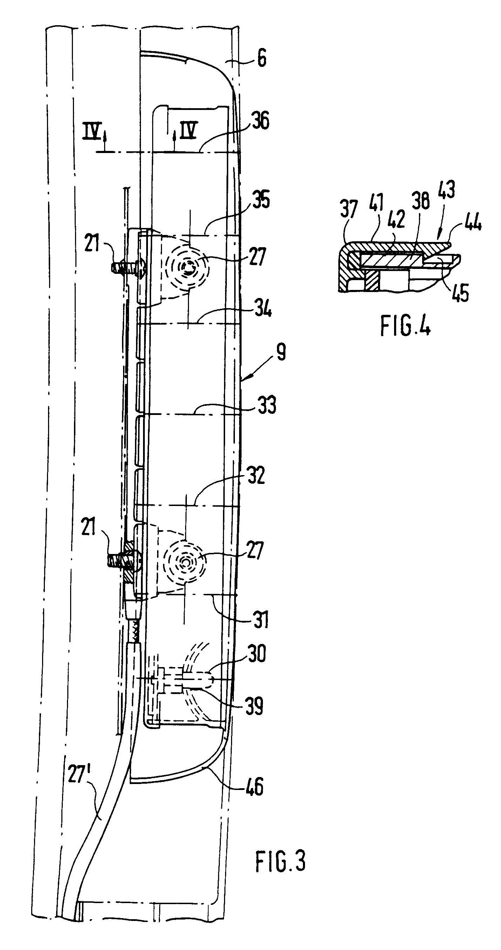

- Fig. 3: eine Ansicht in Pfeilrichtung A der Fig. 2,
- Fig. 4: einen Schnitt nach der Linie IV-IV der Fig. 3.

Das Kraftfahrzeug 1 umfaßt einen Aufbau 2 mit Fließheck-Konfiguration, der mit einer Heckklappe 3 versehen ist. Die Heckklappe 3 besitzt an einer einer Heckabschlußwand 4 benachbarten Seite eine Luftleitvorrichtung 5. Die Luftleitvorrichtung 5 wird gebildet durch zwei übereinanderliegende Leitelemente 6, 7, die einen Kanal 8 bilden. Nähere Einzelheiten einer Luftleitvorrichtung dieser Art sind in der DE-OS 35 14 790 beschrieben.

In die Luftleitvorrichtung 5, und zwar in das untere Leitelement 6 integriert ist eine Bremsleuchte 9, die zusätzlich zu üblichen Bremsleuchten vorgesehen ist; sie wird, weil am Fahrzeug höher angeordnet als die zuletzt genannten, als hochgesetzte Bremsleuchte bezeichnet. Sie ist flach kastenförmig ausgebildet, wobei ihre längere Seite quer zur Fahrzeuglängsrichtung horizontal verläuft.

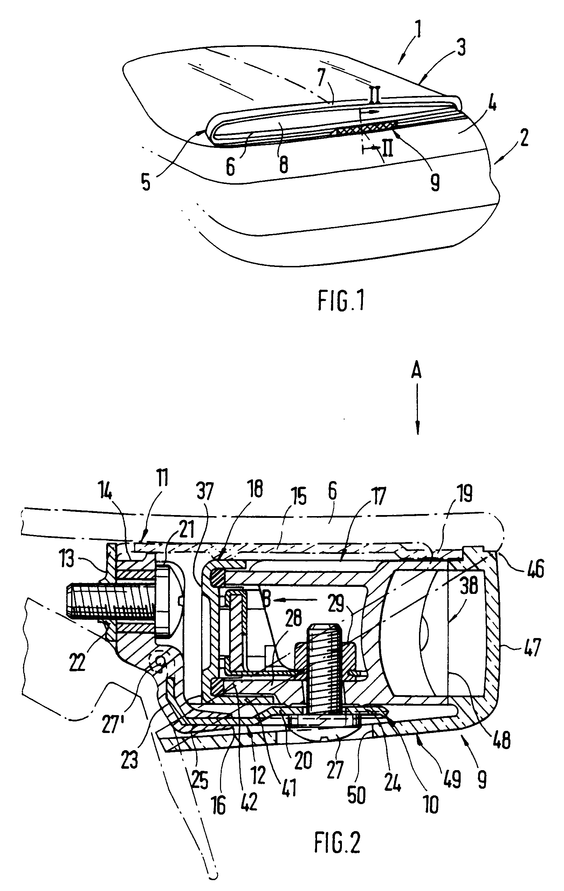

Die Bremsleuchte 9 ruht in einer U-förmigen Aufnahme 10 (Fig. 2) des Leitelementes 6, die einen ersten Aufnahmeabschnitt 11 und einen zweiten Aufnahmeabschnitt 12 umfaßt. Beide sind winkelförmig ausgebildet und an Stegen 13, 14 zusammengesetzt, die rechtwinkelig zu Schenkeln 15, 16 verlaufen. Die parallel verlaufenden Schenkel 15, 16 stützen sich an einem im Querschnitt rechtwinkeligen Leuchtengehäuse 17 der Bremsleuchte 9 ab. Im Ausführungsbeispiel sind hierzu an den Schenkel 15, 16 örtliche Durchsetzungen 18, 19 bzw. 20 vorgesehen.

Der erste Aufnahmeabschnitt 11 und der zweite Aufnahmeabschnitt 12 sind unabhängig voneinander hergestellte Bauteile. Dabei ist der erste Aufnahmeabschnitt 11 am Leitelement 6 durch geeignete Verfahren fest angebracht, wogegen der zweite Aufnahmeabschnitt 12 durch wenigstens eine Schraube 21 mit dem ersten Aufnahmeabschnitt verbunden ist. Die Schraube 21 ist im Bereich der Stege 13, 14 vorgesehen und in Einschubrichtung B (Fig. 2) gesehen in ein Gewinde 22 des Steges 13 des ersten Aufnahmeabschnitts 11 eingedreht.

Der zweite Aufnahmeabschnitt 12 ist durch ein Halteteil 23 und eine metallische Brücke 24 dargestellt. Die Brücke 24 ist plattenartig ausgestaltet und ruht formschlüssig in einem winkeligen Schlitz 25 des Halteteils 23. Darüber hinaus bildet die Brücke mit dem aus dem Schlitz herausgeführten Abschnitt 26 den Schenkel 16 und sie ist an ein elektrisches Kabel 27' angeschlossen.

Die Bremsleuchte 9 wird mittels der Brücke 24 und einer Schraube 27 in der Aufnahme 10 gehalten. Dazu durchdringt die Schraube 27 den Schenkel 16 und einen Steg 28 des Leuchtengehäuses 17, wobei die senkrecht zum Steg 16 ausgerichtete Schraube 27 in eine mit dem Steg 28 verbundene Gewindemutter 29 eingedreht ist.

Die Bremsleuchte 9 umfaßt mehrere Leuchtkörper 30, 31, 32, 33, 34, 35, 36, die über die an das Kabel 27' angeschlossene Brücke 24, die Schrauben 27 und den Gewindebolzen 29 mit Strom versorgt werden.

Das Leuchtengehäuse 17 ist mehrteilig ausgeführt und umfaßt ein Sockelteil 37 und ein Reflektorengehäuse 38. Beide bestehen aus Kunststoff. Das Sockelteil 37 trägt die Leuchtkörper 30 bis 36, die korrespondierende Öffnungen 39 in Reflektoren 40 des Reflektorengehäuses 38 durchdringen. Außerdem umgreift das Sockelteil 37 das Reflektorengehäuse 38 an benachbarten Seiten 41, 42, und sie werden mittels Rastverbindungen 43 in Lage gehalten, die im Bereich der benachbarten Seiten 41, 42 wirksam sind. Die Rastverbindungen werden durch federnde Abschnitte 44 gebildet, die in entsprechenden Aufnahmen 45 eingreifen.

Um die Bremsleuchte 9 aufzunehmen, ist das Leitelement 6 mit einer Ausnehmung 46 versehen, die mit einer Streuscheibe 47 zusammenwirkt. Die Streuscheibe 47 ist von der freien Seite 48 (Fig. 2) des Reflektorengehäuses 38 weggeführt und mit einer Verlängerung 49 versehen, die den Schenkel 16 des zweiten Aufnahmeabschnitts 12 abdeckt. In der Verlängerung 49 ist eine Öffnung 50 vorgesehen, über die die Schraube 27 zugänglich ist.

## Patentansprüche

1. Heckleuchte für ein Kraftfahrzeug, insbesondere zusätzliche Bremsleuchte, die an einer Heck-Luftleitvorrichtung eines Aufbaus des Kraftfahrzeugs angeordnet ist und in einer im Querschnitt U-förmigen Aufnahme der Luftleitvorrichtung ruht, dadurch gekennzeichnet, daß die Aufnahme (10) durch einen ersten winkelförmigen Aufnahmeabschnitt (11) und einen zweiten winkelförmigen Aufnahmeabschnitt (12) gebildet wird, die an rechtwinkelig zu Schenkeln (15, 16) der Aufnahmeabschnitte (11, 12) verlaufenden Stege (13, 14) zusammengesetzt sind, wobei ein im Querschnitt rechteckiges Leuchtengehäuse (A) der Bremsleuchte (9) durch die parallel ausgerichteten Schenkel (15, 16) abgestützt wird.

2. Heckleuchte nach Anspruch 1, dadurch gekennzeichnet, daß der erste Aufnahmeabschnitt (11) an der Luftleitvorrichtung (5) befestigt ist und der zweite Aufnahmeabschnitt (12) durch wenigstens eine Schraube (21) mit dem ersten Aufnahmeabschnitt (11) in Verbindung steht, wobei die Schraube (21) im Bereich der Stege (13, 14) vorgesehen ist.

3. Heckleuchte nach Anspruch 2, dadurch gekennzeichnet, daß die Schraube (21) - in Einschubrichtung (B-B) des Leuchtengehäuses (17) gesehen - in ein Gewinde (22) des Stegs (13) des ersten Aufnahmeabschnitts (11) eingedreht ist.

4. Heckleuchte nach den Ansprüchen 1 und 2, dadurch gekennzeichnet, daß der zweite Aufnahmeabschnitt (12) ein Halteteil (23) und eine Brücke (24) umfaßt, wobei die plattenartige Brücke (24) einerseits formschlüssig in einem winkelförmigen Schlitz (25) des Halteteils (23) ruht und andererseits einen Teil des Schenkels (16) des zweiten Aufnahmeabschnitts (12) bildet.

5. Heckleuchte nach Anspruch 4, dadurch gekennzeichnet, daß die Brücke (24) an ein elektrisches Kabel (27) angeschlossen ist.

6. Heckleuchte nach einem oder mehreren der vorhergehenden Ansprüche, dadurch gekennzeichnet, daß die Bremsleuchte (9) über die Brücke (24) und eine Schraube (27) der Aufnahme in Lage gehalten wird.

7. Heckleuchte nach den Ansprüchen 1 und 6, dadurch gekennzeichnet, daß die Schraube (27) die Brücke (24) und einen Steg (28) des Leuchtengehäuses durchdringt und in eine Gewindeschraube des Stegs eingedreht ist.

8. Heckleuchte nach einem oder mehreren der vohergehenden Ansprüche, dadurch gekennzeichnet, daß ein oder mehrere Leuchtkörper (30 - 36) der Bremsleuchte über die Brücke, die Schraube (27) und die Gewindemutter (29) mit Strom versorgt werden.

9. Heckleuchte nach einem oder mehreren der vorhergehenden Ansprüche, dadurch gekennzeichnet, daß das Leuchtengehäuse (7) ein Sockelteil (37) und ein Reflektorengehäuse (38) umfaßt.

10. Heckleuchte nach Anspruch 9, dadurch gekennzeichnet, daß das Sockelteil (37) mehrere Leuchtkörper (30 - 36) trägt, die korrespondierende Öffnungen (39) in Reflektoren (40) des Reflektorengehäuses (38) durchdringen.

11. Heckleuchte nach Anspruch 10, dadurch gekennzeichnet, daß das Sockelteil (37) das Reflektorengehäuse (38) an benachbarten Seiten (41, 42) umgreift.

12. Heckleuchte nach einem oder mehreren der vorhergehenden Ansprüche, dadurch gekennzeichnet, daß das Sockelteil (37) und das Reflektorengehäuse (38) aus Kunststoff bestehen.

13. Heckleuchte nach einem oder mehreren der vorhergehenden Ansprüche, dadurch gekennzeichnet, daß das Sockelteil (37) und das Reflektorengehäuse (38) im Bereich der benachbarten Seiten (41, 42) mittels Rastverbindungen (43, 44) in Lage gehalten werden.

14. Heckleuchte nach Anspruch 1, wobei die Luftleitvorrichtung zwei übereinanderliegende, einen Kanal bildende Leitelemente aufweist, dadurch gekennzeichnet, daß das Leuchtengehäuse (17) in einer Ausnehmung (43) des unteren Leitelementes (6) eingesetzt ist.

15. Heckleuchte nach einem oder mehreren der vorhergehenden Ansprüche, dadurch gekennzeichnet, daß eine vom Reflektorengehäuse (38) weggeführte Streuscheibe (47) eine Verlängerung (49) zur Abdeckung des Schenkels (16) des zweiten Aufnahmeabschnitts (12) aufweist.

## Claims

1. A tail light for a motor vehicle, in particular an additional brake light, mounted on a rear spoiler device of the body of the motor vehicle and resting in a receiving means of U-shaped cross-section in the spoiler device, **characterized in that** the receiving means (10) is formed by a first angular receiving portion (11) and a second angular receiving portion (12) which are fitted onto webs (13, 14) extending at right angles to arms (15, 16) of the receiving portions (11, 12), wherein a casing **(A)** of the brake light (9) of rectangular cross-section is supported by the arms (15, 16) orientated parallel.

2. A tail light according to Claim 1, **characterized in that** the first receiving portion (11) is secured to the spoiler device (5) and the second receiving portion (12) is connected to the first receiving portion (11) by at least one screw (21), the screw (21) being provided in the region of the webs (13, 14).

3. A tail light according to Claim 2, **characterized in that** the screw (21) is screwed into a thread (22) in the web (13) of the first receiving portion (11) as viewed in the direction of insertion (**B-B**) of the light casing (17).

4. A tail light according to Claims 1 and 2, **characterized in that** the second receiving portion (12) comprises a retaining portion (23) and a bridge (24), the plate-like bridge (24) resting with positive locking in an angular slot (25) in the holding part (23) on the one hand and forming part of the arm (16) of the second receiving portion (12) on the other hand.

5. A tail light according to Claim 4, **characterized in that** the bridge (24) is connected to an electrical cable (27).

6. A tail light according to one or more of the preceding Claims, **characterized in that** the brake light (9) is held in position by way of the bridge (24) and a screw (27) of the receiving means.

7. A tail light according to Claims 1 and 6, **characterized in that** the screw (27) passes through the bridge (24) and a web (28) of the light casing and is screwed into a thread in the web.

8. A tail light according to one or more of the preceding Claims, **characterized in that** one or more lighting elements (30 - 36) of the brake light are supplied with current by way of the bridge, the screw (27) and the threaded nut (29).

9. A tail light according to one or more of the preceding Claims, **characterized in that** the light casing (7) comprises a socket part (37) and a reflector casing (38).

10. A tail light according to Claim 9, **characterized in that** the socket part (37) carries a plurality of lighting elements (30 - 36) which pass through corresponding openings (39) in reflectors (40) of the reflector casing (38).

11. A tail light according to Claim 10, **characterized in that** the socket part (37) engages around the reflector casing (38) on adjacent sides (41, 42).

12. A tail light according to one or more of the preceding Claims, **characterized in that** the socket part (37) and the reflector casing (38) consist of plastics material.

13. A tail light according to one or more of the preceding Claims, **characterized in that** the socket part (37) and the reflector casing (38) are held in position in the region of the adjacent sides (41, 42) by means of catch fastenings (43, 44).

14. A tail light according to Claim 1, wherein the spoiler device comprises two guide members situated one above the other and forming a channel, **characterized in** **that** the light casing (17) is inserted into a recess (43) in the lower guide member (6).

15. A tail light according to one or more of the preceding Claims, **characterized in that** a diffusing lens (47) directed away from the reflector casing (38) has an extension (49) for covering the arm (16) of the second receiving portion (12).

## Revendications

1. Feu arrière pour un véhicule automobile, notamment feu stop supplémentaire, qui est disposé sur un dispositif déflecteur d'air arrière d'une carrosserie du véhicule automobile, et qui repose dans un logement en forme de "U" en section transversale, du dispositif déflecteur d'air, caractérisé en ce que le logement (10) est formé par un premier tronçon de logement (11) de forme coudée, et un second tronçon de logement (12) de forme coudée, qui sont assemblés au niveau de branches (13, 14) s'étendant perpendiculairement à des ailes (15, 16) des tronçons de logement (11, 12), un boîtier de feu (17) du feu stop (9), rectangulaire en section transversale, étant maintenu par les ailes (15, 16) orientées parallèlement l'une à l'autre.

2. Feu arrière selon la revendication 1, caractérisé en ce que le premier tronçon de logement (11) est fixé sur le dispositif déflecteur d'air (5), et le second tronçon de logement (12) est relié, par au moins une vis (21), au premier tronçon de logement (11), la vis (21) étant prévue dans la zone des branches (13, 14).

3. Feu arrière selon la revendication 2, caractérisé en ce que la vis (21), vue dans la direction d'introduction (B-B) du boîtier de feu (17), est vissée dans un filetage (22) de la branche (13) du premier tronçon de logement (11).

4. Feu arrière selon les revendications 1 et 2, caractérisé en ce que le second tronçon de logement (12) comprend une partie de support (23) et une tablette (24), la tablette (24) en forme de plaque reposant d'un côté, par complémentarité de forme, dans une fente (25) de forme coudée de la partie de support (23), et formant de l'autre côté, une partie de l'aile (16) du second tronçon de logement (12).

5. Feu arrière selon la revendication 4, caractérisé en ce que la tablette (24) est raccordée à un câble électrique (27').

6. Feu arrière selon l'une ou plusieurs des revendications précédentes, caractérisé en ce que le feu stop (9) est maintenu en position par l'intermédiaire de la tablette (24) et d'une vis (27) du logement.

7. Feu arrière selon les revendications 1 et 6, caractérisé en ce que la vis (27) traverse la tablette (24) et une nervure (28) du boîtier de feu, et est vissée dans un écrou taraudé de la nervure.

8. Feu arrière selon l'une ou plusieurs des revendications précédentes, caractérisé en ce qu'un ou plusieurs corps d'éclairage (30 - 36) du feu stop sont alimentés en courant, par l'intermédiaire de la tablette, de la vis (27) et de l'écrou taraudé (29).

9. Feu arrière selon l'une ou plusieurs des revendications précédentes, caractérisé en ce que le boîtier de feu (17) comprend une partie de base (37) et un boîtier de réflecteur (38).

10. Feu arrière selon la revendication 9, caractérisé en ce que la partie de base (37) porte plusieurs corps d'éclairage (30 - 36), qui traversent des ouvertures correspondantes (39) dans des réflecteurs (40) du boîtier de réflecteur (38).

11. Feu arrière selon la revendication 10, caractérisé en ce que la partie de base (37) enserre le boîtier de réflecteur (38) sur des côtés voisins (41, 42).

12. Feu arrière selon l'une ou plusieurs des revendications précédentes, caractérisé en ce que la partie de base (37) et le boîtier de réflecteur (38) sont réalisés en matière plastique.

13. Feu arrière selon l'une ou plusieurs des revendications précédentes, caractérisé en ce que la partie de base (37) et le boîtier de réflecteur (38) sont maintenus en position dans la zone des côtés voisins (41, 42), au moyen de liaisons par encliquetage (43, 44).

14. Feu arrière selon la revendication 1, le dispositif déflecteur d'air présentant deux éléments déflecteurs disposés l'un au-dessus de l'autre et formant un canal, caractérisé en ce que le boîtier de feu (17) est inséré dans un évidement (46) de l'élément déflecteur inférieur (6).

15. Feu arrière selon l'une ou plusieurs des revendications précédentes, caractérisé en ce qu'une glace de diffusion (47) s'étendant à partir du boîtier de réflecteur (38), comporte un prolongement (49) destiné à recouvrir l'aile (16) du second tronçon de logement (12).
